# EUROPÄISCHE PATENTSCHRIFT

(11) **EP 3 324 170 B1**
(45) Veröffentlichungstag und Bekanntmachung des Hinweises auf die Patenterteilung: **10.03.2021**
(21) Anmeldenummer: 16199812.5
(22) Anmeldetag: 21.11.2016
(51) Int. Cl.: G01M 13/02, B23F 23/12

(54) **VERFAHREN UND VORRICHTUNG ZUR AUTOMATISIERTEN BEARBEITUNG UND PRÜFUNG VON ZAHNRAD-BAUTEILEN**
METHOD AND DEVICE FOR AUTOMATIC PROCESSING AND TESTING OF GEARS
PROCÉDÉ ET DISPOSITIF D'USINAGE AUTOMATISÉ ET DE CONTRÔLE DE COMPOSANTS D'ANGRENAGES

(43) Veröffentlichungstag der Anmeldung: 23.05.2018
(73) Patentinhaber: Klingelnberg AG, 8050 Zürich (CH)
(72) Erfinder: Schweizer, Martin, 76437 Rastatt (DE); Seibicke, Frank, 76332 Bad Herrenalb (DE)
(74) Vertreter: Janke Scholl Patentanwälte PartG mbB

(56) Entgegenhaltungen:
- CN-A- 103 913 296
- DE-A1-102005 022 863
- US-A1- 2015 276 549
- US-B2- 8 127 425
- STADTFELD H: "Automated Closed Loop Manufacturing and correction of Bevel Gear Sets", 19970501, 1. Mai 1997 (1997-05-01), Seiten 1-12, XP001571191,

## Beschreibung

Die Erfindung betrifft ein Verfahren und Vorrichtungen zur automatisierten Bearbeitung und Prüfung von Zahnrad-Bauteilen.

### HINTERGRUND DER ERFINDUNG

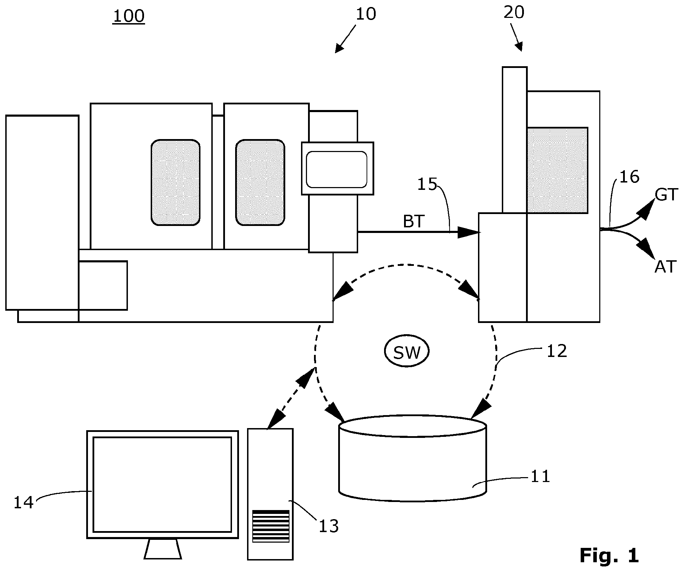

In Fig. 1 ist eine schematisierte Ansicht einer verzahnungsbearbeitenden Maschine 10 des Standes der Technik (z.B. eine Zahnrad-Fräsmaschine oder eine Zahnrad-Schleifmaschine) und eine Messeinrichtung 20 (hier in Form einer separaten Messvorrichtung) des Standes der Technik (z.B. eine Koordinaten-Messeinrichtung) gezeigt. Die Maschine 10 und die Messeinrichtung 20 bilden im gezeigten Beispiel ein Art Fertigungslinie, deren weitere Komponenten ein Speicher 11 und eine Software SW sind. Der Speicher 11 und die Software SW sind hier als externe Komponenten gezeigt, obwohl sie z.B. in der Maschine 10 oder der Messeinrichtung 20 angeordnet sein können. Der Speicher 11 und die Software SW können zu Kommunikationszwecken mit der Maschine 10 und der Messeinrichtung 20 gekoppelt sein, wie durch den strichlierten Doppelpfeil 12 angedeutet. Diese Art der Konstellation wird als closed-loop Konstellation bezeichnet.

Die Software SW kann bei allen Ausführungsformen der Erfindung z.B. Teil einer (Maschinen-)Steuerung sein. Die Software SW kann bei allen Ausführungsformen aber z.B. auch in einem Rechner 13 installiert sein, der mit der Gesamtvorrichtung 100 in Kommunikationsverbindung steht.

Die Handhabung der Bauteile BT ist in Fig. 1 und in allen weiteren Abbildungen in Form von durchgezogenen Pfeilen dargestellt. Die Übergabe der Bauteile BT von der Maschine 10 an die Messeinrichtung 20 ist z.B. durch den Pfeil 15 dargestellt. Der durchgezogene Pfeil 15 bezeichnet quasi eine Handhabungsverbindung zwischen der Maschine 10 und der Messeinrichtung 20. Rechts neben der Messeinrichtung 20 sind zwei gekrümmte Pfeile gezeigt, die wie eine Weiche 16 angeordnet sind. Diese Weiche 16 soll versinnbildlichen, dass die Messeinrichtung 20 eine Unterscheidung von Gutteilen GT und Ausschussteilen AT ermöglicht.

Der Begriff Kopplung wird hier verwendet, um anzudeuten, dass die Maschine 10, die Messeinrichtung 20, der Speicher 11 und die Software SW zumindest kommunikationstechnisch (d.h. für den Datenaustausch) gekoppelt sind. Diese kommunikationstechnische Kopplung (auch Vernetzung genannt) setzt voraus, dass die Maschine 10, die Messeinrichtung 20 und der Speicher 11 das gleiche oder ein kompatibles Kommunikationsprotokoll verstehen und dass alle drei gewissen Konventionen folgen, was den Datenaustausch anbelangt. Die Software SW sollte Zugang zu den Kommunikationsabläufen haben.

Es kann, wie in Fig. 1 angedeutet, ein Rechner 13 mit Display 14 mit der Fertigungslinie und/oder dem Speicher 11 verbunden werden, um z.B. Daten eines zu bearbeitenden Zahnrad-Bauteils zu laden.

Trotz der erwähnten kommunikationstechnischen Kopplung und der Handhabungsverbindung 15, handelt es sich bei der Messeinrichtung 20 um eine Messeinrichtung, die offline eingesetzt wird. Da die Messungen, die in einer solchen Messeinrichtung 20 an einem Bauteil BT durchgeführt werden zeitaufwendig sind, werden in einer Serienproduktion solche Messungen meist nur an einzelnen Bauteilen BT durchgeführt, um z.B. von Zeit zu Zeit zu prüfen, ob die vorgegebenen Fertigungstoleranzen eingehalten werden.

Die Messung eines Bauteils BT in der Messeinrichtung 20 liefert Ist-Daten des betreffenden Bauteils BT. Diese Ist-Daten können z.B. durch die Software SW mit Soll-Daten verglichen werden, die im Speicher 11 gespeichert sind. Falls die Messung eine Abweichung der Ist-Daten von den Soll-Daten ergibt, so können z.B. Korrekturen der Maschineneinstellung der Maschine 10 vorgenommen werden. Bauteile BT, die nicht den Soll-Daten (± Toleranzen) entsprechen, können hier z.B. als Ausschussteile AT ausgesondert werden.

Ein solcher closed-loop-Ansatz liefert hochgenaue Ergebnisse und wird daher heute in der industriellen Fertigung eingesetzt. Der closed-loop-Ansatz hat jedoch, je nach Implementierung, die im Folgenden kurz dargestellten Nachteile:
1. Auftretende Verschlechterungen in den zu überwachenden Merkmalen werden erst mit Verzögerung erkannt, da nur in relativ großen Abständen einzelne Bauteile vermessen werden. Dadurch bedingt entsteht ein erhöhter Ausschuss bei Fehlfunktionen der Maschine bzw. des Prozesses.
2. Eine nachträgliche Analyse von Zusammenhängen zwischen Maschinen- oder Prozessgrößen und der Bauteilqualität sind entweder nur mit dem erheblichen Mehraufwand möglich.
3. Für den überwiegenden Teil der Bauteile gibt es keinerlei Dokumentation der Bauteilqualität, da nur eine kleine Untermenge an Bauteilen vermessen wird. Das Patentdokument US 8 127 425 offenbart eine Vorrichtung und ein Verfahren zur automatisierten Bearbeitung von Zahnrad-Bauteilen.

Es ist eine Aufgabe der Erfindung eine Vorrichtung und ein entsprechendes Verfahren bereit zu stellen, die es ermöglichen den Durchsatz bei der Bearbeitung von Zahnrad-Bauteilen zu erhöhen, ohne Abstriche in Sachen Qualität machen zu müssen.

Die Aufgabe wird durch ein Verfahren gemäß Anspruch 1 und durch eine Vorrichtung gemäß Anspruch 10 gelöst.

Das Verfahren der Erfindung betrifft die automatisierte Bearbeitung von Zahnrad-Bauteilen in einer Gesamtvorrichtung. Dieses Verfahren umfasst die folgenden Schritte:
a) spanabhebendes Bearbeiten eines Zahnrad-Bauteils in einer Verzahnungsmaschine der Gesamtvorrichtung,
b) Durchführen einer Inline-Prüfung des Zahnrad-Bauteils in der Gesamtvorrichtung nach dem spanabhebenden Bearbeiten, wobei die Inline-Prüfung in einer Inline-Prüfeinrichtung vorgenommen wird, die in oder an der Verzahnungsmaschine angeordnet ist, oder wobei die Inline-Prüfung in einer separaten Inline-Prüfeinrichtung vorgenommen wird und mindestens einen Prüfwert bereit stellt,
c) Durchführen eines Vergleichs des mindestens einen Prüfwertes mit mindestens einem Vorgabewert,
d) falls der Schritt c) positiv verläuft, dann Ausgeben des Zahnrad-Bauteils als Gutteil,
e) falls der Schritt c) negativ verläuft, dann
f) Überführen des Zahnrad-Bauteils in eine externe Messeinrichtung zum Durchführen einer Offline-Messung der Gesamtvorrichtung,
g) Durchführen einer Offline-Messung des Zahnrad-Bauteils, wobei die Offline-Messung mindestens einen Messwert bereit stellt,
h) Durchführen eines Vergleichs des mindestens einen Messwertes mit dem mindestens einen Prüfwert,
i) falls der Schritt h) keine Abweichung des Messwertes von dem Prüfwert, oder nur eine Abweichung innerhalb einer vorgegebenen Grenze ergibt, dann automatisiertes Vornehmen einer Anpassung der Inline-Prüfung.

Gemäss Erfindung geht es auch um eine Gesamtvorrichtung, die zur automatisierten Bearbeitung von Zahnrad-Bauteilen ausgelegt ist. Diese Gesamtvorrichtung umfasst:
- eine verzahnungsbearbeitende Maschine zum spanabhebenden Bearbeiten einer Serie von Zahnrad-Bauteilen,
- eine erste Messeinrichtung, die zum Durchführen einer Inline-Prüfung jedes Bauteils ausgelegt ist, das zuvor in der Maschine bearbeitet wurden, wobei es sich bei der ersten Messeinrichtung um eine Inline-Prüfeinrichtung handelt, die in oder an der Verzahnungsmaschine angeordnet ist, oder wobei die erste Messeinrichtung als separate Messeinrichtung ausgeführt ist
- eine zweite Messeinrichtung, die als externe Messeinrichtung (20) zum Durchführen einer Offline-Messung von einem Teil der Bauteile ausgelegt ist, die zuvor in der ersten Messeinrichtung geprüft wurden, und
- eine Schleife, sowie
- eine Software, die zum Durchführen der folgenden Schritte für jedes Bauteil ausgelegt ist:
   ∘ Durchführen eines ersten Vergleichs mindestens eines Prüfwertes, der von der ersten Messeinrichtung bereitgestellt wurde, mit mindestens einem Vorgabewert,
   ∘ Auslösen der Ausgabe des entsprechenden Zahnrad-Bauteils als Gutteil, falls das Durchführen des ersten Vergleichs positiv verläuft,
   ∘ Überführen des entsprechenden Zahnrad-Bauteils in die zweiten Messeinrichtung zum Durchführen der Offline-Messung, falls der erste Vergleich nicht positiv verläuft,
   ∘ Durchführen eines zweiten Vergleichs von mindestens einem Messwert, der von der zweiten Messeinrichtung bereitgestellt wurde, mit dem mindestens einen Prüfwert,
   ∘ automatisiertes Vornehmen einer Anpassung der Inline-Prüfung und/oder der ersten Messeinrichtung über die Schleife, falls der zweite Vergleich keine Abweichung des mindestens einen Messwertes von dem mindestens einen Prüfwert, oder nur eine Abweichung innerhalb einer vorgegebenen Grenze ergibt.

Das erfindungsgemäße Verfahren setzt auf eine schnelle Inline-Prüfung mit externem Abgleich, um so die Qualität der Inline-Prüfung permanent überprüfen und gegebenenfalls korrigieren zu können.

Vorzugsweise dient die offline-Messung der Erfindung bei allen Ausführungsformen zum endgültigen Erkennen von Ausschussteilen und zum Entscheiden, ob eine automatisierte Anpassung der Inline-Prüfung vorgenommen werden soll.

Bei der Gesamtvorrichtung der Erfindung handelt es sich um eine Vorrichtung, die als Teil einer Fertigungsstraße dient, oder die als Fertigungsstraße ausgelegt ist. Eine entsprechende Gesamtvorrichtung zeichnet sich dadurch aus, dass sie takt-basiert arbeitet. D.h. die einzelnen Komponenten der Gesamtvorrichtung arbeiten innerhalb des zeitlichen Rahmens (Grundtakt genannt), der durch die Taktung der Gesamtvorrichtung definiert ist. Alle einzelnen Komponenten, die in Serie hintereinander Bauteile bearbeiten und prüfen, haben spezifische Taktzeiten, die kleiner oder gleich dem Grundtakt sind.

Optional kann die offline-Messung der Erfindung bei allen Ausführungsformen zusätzlich auch zum Vornehmen einer Korrektur der spanenden Bearbeitung dienen.

Bei allen Ausführungsformen kann der Schritt h), der das Durchführen eines Vergleichs des Messwertes mit dem Prüfwert betrifft, entweder einen direkten Vergleich des Messwertes mit dem Prüfwert vornehmen, falls die Inline-Prüfung mindestens einen Prüfwert bereit stellt, der mit einem Messwert der Offline-Messung vergleichbar ist. Oder dieser Schritt h) umfasst einen indirekten Vergleich des Messwertes mit dem Prüfwert. Unter einem indirekten Vergleich wird hier ein Verfahren bezeichnet, das den mindestens einen Prüfwert als Rohdatum oder Rohwert behandelt. Das Rohdatum bzw. der Rohwert wird vorzugweise bei allen Ausführungsformen einer weiteren Verarbeitung unterzogen, um mindestens einen aufbereiteten Prüfwert zu erhalten. Erst dann kann z.B. ein Vergleich des Messwertes mit dem aufbereiteten Prüfwert erfolgen.

Der indirekte Vergleich umfasst daher vorzugsweise bei allen Ausführungsformen einen Teilschritt zum rechnerischen Aufbereiten der als Rohdaten bzw. Rohwerte betrachteten Prüfwerte. Diese rechnerische Aufbereitung wird durchgeführt, um dann einen Messwert mit dem aufbereiteten Prüfwert in Bezug setzen zu können. Das Inbezugsetzen kann dann z.B. einen direkten Vergleich des Messwertes mit dem aufbereiteten Prüfwert umfassen, oder der aufbereitete Prüfwert wird als Prognose einer bestimmten Eigenschaft des Zahnrad-Bauteils betrachtet und diese Prognose wird im Rahmen der Offline-Messung validiert. D.h. der Messwert der Offline-Messung wird dazu eingesetzt, um die Prognose zu verifizieren. Falls die Prognose verifiziert werden kann, so hat quasi die Offline-Messung bestätigt, dass die Inline-Prüfung korrekt war.

Bei allen Ausführungsformen kann das automatisierte Anpassen der Inline-Prüfung einen oder mehrere der folgenden Schritte umfassen:
- (Nach-)Justieren einer Inline-Prüfeinrichtung, die zum Durchführen der Inline-Prüfung eingesetzt wurde, oder
- Kalibrierung einer Inline-Prüfeinrichtung, die zum Durchführen der Inline-Prüfung eingesetzt wurde,
- Eichung der Inline-Prüfeinrichtung, oder
- Anpassung bei einer rechnerischen Aufbereitung oder Verarbeitung des ersten Prüfwerts, oder
- Anpassung eines Schwellenwerts der Inline-Prüfeinrichtung, oder
- Vorgeben eines Offsets der Inline-Prüfeinrichtung, oder
- Anpassung von Prüfkriterien der Inline-Prüfeinrichtung.

Der Einsatz einer Prüfroutine im Rahmen der Inline-Prüfung ist für alle Ausführungsformen vorteilhaft, da sie die Qualität der Bauteile direkt und unmittelbar beeinflusst und dadurch die Ausschussquote deutlich reduzieren kann.

Bei allen Ausführungsformen kann eine Routineprüfung der Inline-Prüfung durch eine externe Offline-Messung erfolgen, um auch dann einen automatischen Abgleich zu ermöglichen, wenn über einen gewissen Zeitraum keine Bauteile als vorläufige Ausschussteile einer Offline-Messung unterzogen wurden. Eine solche Routineprüfung kann z.B. durch einen Zähler realisiert werden, der die Anzahl der durchgeführten Inline-Prüfung zählt. Bei jeder n.ten Inline-Prüfung kann dann z.B. eine Offline-Messung erfolgen.

Vorteilhafte Ausgestaltungen der erfindungsgemäßen Koordinaten-Messvorrichtung und des Verfahrens sind den abhängigen Ansprüchen zu entnehmen.

### ZEICHNUNGEN

Ausführungsbeispiele der Erfindung werden im Folgenden unter Bezugnahme auf die Zeichnungen näher beschrieben.
- **FIG. 1**: zeigt eine schematische Ansicht einer verzahnungsbearbeitenden Maschine und einer Messeinrichtung des Standes der Technik, die kommunikationstechnisch miteinander verbunden sind;
- **FIG. 2**: zeigt eine schematische Ansicht einer beispielhaften Fertigungslinie der Erfindung, die eine verzahnungsbearbeitende Maschine mit integrierter Messeinrichtung zum Durchführen einer Inline-Prüfung und eine externe Messeinrichtung zum Durchführen einer Offline-Messung umfasst;
- **FIG. 3**: zeigt eine schematische Ansicht einer weiteren beispielhaften Fertigungslinie der Erfindung, die eine verzahnungsbearbeitende Maschine, eine erste externe Messeinrichtung zum Durchführen einer Inline-Prüfung und eine zweite externe Messeinrichtung zum Durchführen einer Offline-Messung umfasst;
- **FIG. 4**: zeigt ein schematisches Flussdiagramm eines erstens Verfahrens der Erfindung;
- **FIG. 5**: zeigt ein schematisches Flussdiagramm eines zweitens Verfahrens der Erfindung.

### DETAILIERTE BESCHREIBUNG

Im Zusammenhang mit der vorliegenden Beschreibung werden Begriffe verwendet, die auch in einschlägigen Publikationen und Patenten Verwendung finden. Es sei jedoch angemerkt, dass die Verwendung dieser Begriffe lediglich dem besseren Verständnis dienen soll. Der erfinderische Gedanke und der Schutzumfang der Patentansprüche soll durch die spezifische Wahl der Begriffe nicht in der Auslegung eingeschränkt werden. Die Erfindung lässt sich ohne weiteres auf andere Begriffssysteme und/oder Fachgebiete übertragen. In anderen Fachgebieten sind die Begriffe sinngemäß anzuwenden.

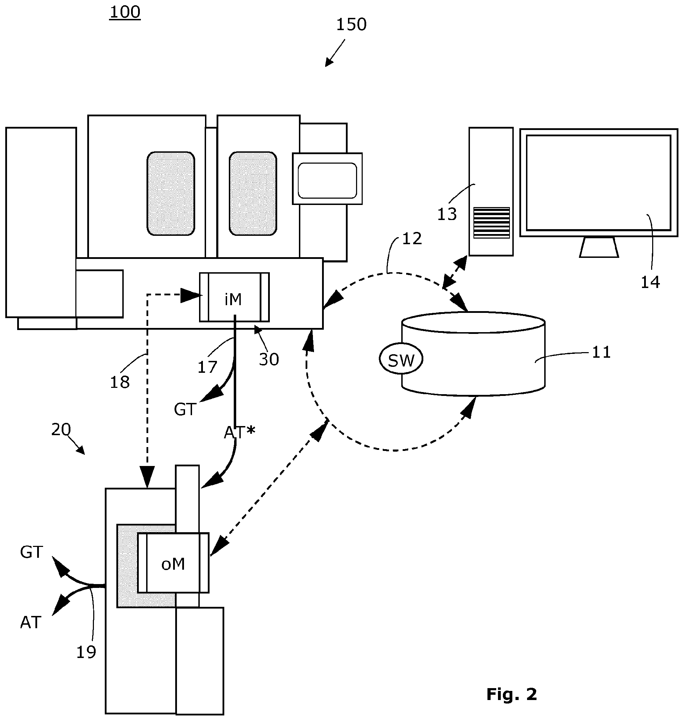

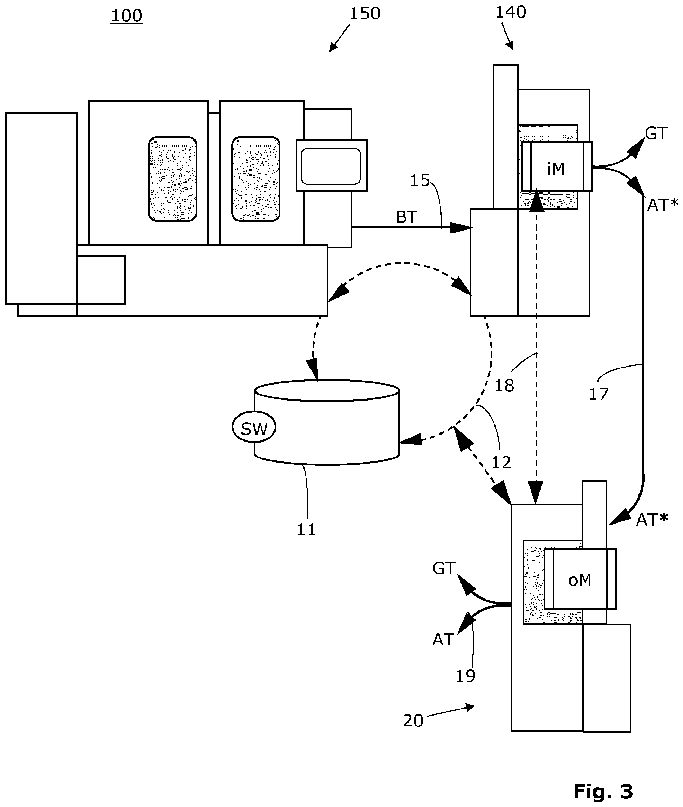

In vorteilhaften Ausführungsformen der Erfindung, die in Fig. 2 und 3 gezeigt sind, geht es um eine Fertigungslinie 100 (auch Gesamtvorrichtung 100 genannt), die mindestens eine Verzahnungsmaschine 150 und eine Messeinrichtung zum Durchführen einer Inline-Prüfung iM umfasst. Diese Messeinrichtung kann entweder Teil der Verzahnungsmaschine 150 sein, wie in Fig. 2 dadurch schematisch angedeutet, dass im Bereich der Verzahnungsmaschine 150 ein Funktionsblock iM vorgesehen und mit dem Bezugszeichen 30 versehen ist. Alternativ kann die Messeinrichtung als externe Messeinrichtung ausgelegt sein, wie in Fig. 3 dadurch schematisch angedeutet, dass neben der Verzahnungsmaschine 150 eine Messeinrichtung 140 steht, die einen Funktionsblock iM umfasst.

D.h., die Messeinrichtung 30 bzw. 140, die hier auch als Inline-Prüfeinrichtung bezeichnet wird, kann bei allen Ausführungsformen entweder in oder an der Verzahnungsmaschine 150 angeordnet sein (z.B. als integrierte Messeinrichtung im Bearbeitungsraum der Verzahnungsmaschine 150), oder sie kann z.B. als freistehende Messeinrichtung 140 ausgeführt sein. In jedem Fall ist die Handhabung der Zahnrad-Bauteile BT in der Fertigungslinie 100 so automatisiert, dass jedes Zahnrad-Bauteil BT einer Serien von Bauteilen während oder nach der Bearbeitung in der Verzahnungsmaschine 150 einer Inline-Prüfung iM unterzogen werden.

Als Inline-Prüfung iM wird bei allen Ausführungsformen eine Prüfung von Bauteilen BT bezeichnet, die schnell genug ist, um im Takt der Serienproduktion durchgeführt zu werden.

D.h., als Inline-Prüfeinrichtung wird hier eine Messeinrichtung 30 oder 140 bezeichnet, deren Taktgeschwindigkeit schneller oder gleich schnell ist, wie die Taktgeschwindigkeit der Fertigungslinie 100. Das langsamste Glied einer solchen Fertigungslinie 100 definiert nämlich die Taktgeschwindigkeit der gesamten Linie. Wenn z.B. das Beschicken der Verzahnungsmaschine 150 mit einem Zahnrad-Bauteil BT 2 Sekunden, die spanabhebende Bearbeitung in der Verzahnungsmaschine 150 8 Sekunden und die Übergabe des Zahnrad-Bauteils BT an die Inline-Prüfeinrichtung 130 2 Sekunden in Anspruch nehmen, dann stößt dieser Abschnitt der Fertigungslinie 100 alle 12 Sekunden ein bearbeitetes Bauteil BT aus. Damit die Inline-Prüfeinrichtung 130 in der Lage ist ein solches Bauteil BT schnell genug einer Inline-Prüfung iM zu unterziehen, darf die Taktzeit der Inline-Prüfeinrichtung 130 kleiner gleich 12 Sekunden betragen, um ein einfaches Beispiel zu geben.

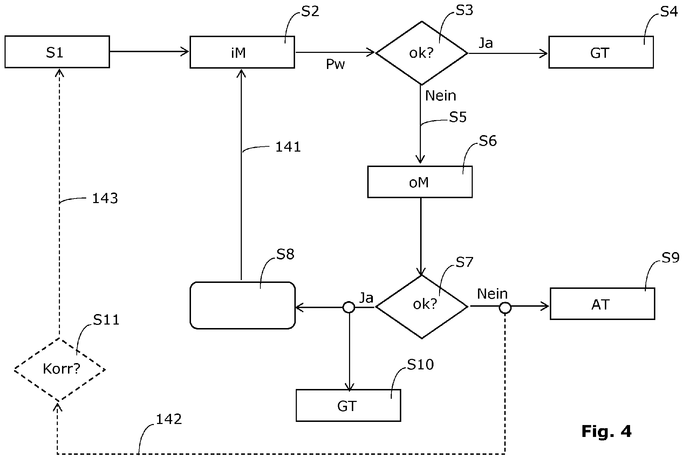

In Fig. 4 sind anhand eines Flussdiagramms die Schritte eines Verfahrens der Erfindung gezeigt. Im Folgenden wird unter anderem auch auf diese Fig. 4 Bezug genommen.

Das Verfahren zur automatisierten Bearbeitung von Zahnrad-Bauteilen BT, umfasst gemäß Erfindung die folgenden Schritte (aus der Verwendung von Kleinbuchstaben in alphabetischer Reihenfolge soll keine zwingende Chronologie der Schritte abgeleitet werden):
a) spanabhebendes Bearbeiten eines Zahnrad-Bauteils BT in einer Verzahnungsmaschine 150 (Schritt S1);
b) Durchführen einer Inline-Prüfung iM (Schritt S2) des Zahnrad-Bauteils BT nach dem spanabhebenden Bearbeiten S1, wobei die Inline-Prüfung iM mindestens einen Prüfwert Pw bereit stellt,
c) Durchführen eines Vergleichs (Schritt S3) des mindestens einen Prüfwertes Pw mit mindestens einem Vorgabewert Vw (z.B. mit einem Sollwert),
d) falls der Schritt c) (Schritt S3) positiv verläuft, dann wird das Zahnrad-Bauteil BT als Gutteil GT ausgegeben (Schritt S4),
e) falls der Schritt c) negativ verläuft, dann
f) Überführen des entsprechenden Zahnrad-Bauteils BT in eine Offline-Messvorrichtung 20 (Schritt S5);
g) Durchführen einer Offline-Messung oM (Schritt S6) des entsprechenden Zahnrad-Bauteils BT in der Offline-Messvorrichtung 20, wobei die Offline-Messung oM mindestens einen Messwert Mw bereit stellt;
h) Durchführen eines direkten oder indirekten Vergleichs des Messwertes Mw mit dem Prüfwert Pw (Schritt S7),
i) falls der Schritt h) keine Abweichung des Messwertes Mw von dem Prüfwert Pw, oder nur eine Abweichung innerhalb einer vorgegebenen Grenze ergibt, dann automatisiertes Vornehmen einer Anpassung der Inline-Prüfung iM (Schritt S8).

Im Folgenden wird im Einzelnen weiter auf diese Schritte a) bis i) eingegangen.

Im Schritt a) (Schritt S1) kann ein zuvor unverzahntes Bauteil BT beispielweise durch Schleifen und/oder Fräsen verzahnt werden. Der Schritt a) kann aber z.B. auch der Feinbearbeitung eines vorverzahnten Bauteils BT dienen.

Falls die Inline-Prüfeinrichtung 30 bzw. 140 in oder an der Verzahnungsmaschine 150 angeordnet ist, so kann in einem Zwischenschritt z.B. die Werkstückspindel der Verzahnungsmaschine 150, in welcher das Zahnrad-Bauteil BT beim spanenden Bearbeiten eingespannt ist, aus einer Bearbeitungsstellung in eine Meßposition überführt werden. In dieser Meßposition kommt dann im Schritt b) (Schritt S2) die Inline-Prüfeinrichtung 30 bzw. 140 zum Einsatz, um im Schnellverfahren eine Inline-Prüfung iM vorzunehmen.

Da aufgrund der knappen Zeitvorgaben für das Durchführen einer Inline-Prüfung iM nur wenig Zeit zur Verfügung steht, kann eine solche Inline-Prüfung iM stets nur eine Prüfung einiger weniger Parameter, Größen oder Werte umfassen. Das Ergebnis dieser Inline-Prüfung iM liefert stets mindestens einen Wert, der hier als Prüfwert bezeichnet wird.

Eine komplette Messung des Zahnrad-Bauteils BT ist nur in einer Offline-Messvorrichtung 20 möglich. Das Ergebnis dieser Offline-Messung oM liefert stets mindestens einen Wert, der hier als Messwert bezeichnet wird.

Als Offline-Messeinrichtung wird hier eine Messeinrichtung 20 bezeichnet, deren Taktgeschwindigkeit langsamer ist, wie die Taktgeschwindigkeit der Fertigungslinie 100.

Die Offline-Messvorrichtung 20 sollte bei allen Ausführungsformen der Erfindung dazu auslegt sein mindestens dieselben oder vergleichbare Parameter, Größen oder Werte zu erfassen wie die Inline-Prüfeinrichtung 30 bzw. 140. Wenn die Inline-Prüfeinrichtung 30 bzw. 140 z.B. die Zahndicke der Zahnrad-Bauteile BT prüft, dann muss die Offline-Messvorrichtung 20 die Zahndicke derjenigen Zahnrad-Bauteile BT messen können, die im Schritt S3 nicht für gut befunden wurden.

Bei anderen Ausführungsformen kann im Schritt b) (Schritt S2) das Zahnrad-Bauteil BT in der Verzahnungsmaschine 150 umgespannt (d.h. von einer ersten Werkstückspindel an eine zweite Werkstückspindel übergeben) werden, um dann die Inline-Prüfung iM durchzuführen. Bei Ausführungsformen, bei denen vor dem Prüfen iM ein Umspannen stattfindet, ist die Messeinrichtung 30 der Verzahnungsmaschine 150 vorzugsweise in einem Bereich angeordnet, der von Spänen und Kühlflüssigkeit geschützt ist.

Falls es sich um eine separate Inline-Prüfeinrichtung 140 (siehe z.B. Fig. 3) handelt, erfolgt vor dem Schritt b) (Schritt S2) in einem Zwischenschritt eine teil- oder vollautomatisierte Übergabe eines Bauteils BT nach dem anderen an die Inline-Prüfeinrichtung 140. Diese Übergabe kann z.B. mittels eines Roboters, eines Greifsystems oder einer Förderanlage erfolgen. In Fig. 3 ist diese Übergabe der Bauteile BT durch die Handhabungsverbindung 15 symbolisiert.

Typischerweise handelt es sich bei der Inline-Prüfung iM im Rahmen der Erfindung um eine der folgenden Prüfungsverfahren (die folgende Auflistung ist als offene Aufzählung zu verstehen):
- Überprüfung der Teilung an k Zahnflanken, wobei k < ist als die Zähnezahl z des Zahnrad-Bauteils BT;
- Prüfung des Schrägungswinkels an k Zahnflanken, wobei k < ist als die Zähnezahl z des Zahnrad-Bauteils BT;
- Prüfung der Zahndicke mindestens eines Zahnes des Zahnrad-Bauteils BT;
- Prüfung der Lückenweite mindestens eines Zahnlücke des Zahnrad-Bauteils BT.

Vorzugsweise kommt bei allen Ausführungsformen der Erfindung eine Inline-Prüfeinrichtung 30 oder 140 zum Einsatz, die berührungslos arbeitet. Besonders geeignet sind optische Meßverfahren, wie z.B. Meßverfahren, die einen optischen Sensor im Schalt-Verfahren einsetzen. Auch geeignet sind induktive Meßverfahren.

Im Schritt c) (Schritt S3) wird ein Vergleich durchgeführt, wobei im Rahmen dieses Vergleichs z.B. mindestens ein Prüfwert Pw, der im Rahmen der Inline-Prüfung iM ermittelt wurde, mit einem Vorgabewert Vw (z.B. mit einem Sollwert), verglichen wird. Im Fig. 4 ist der Vergleich im Schritt S3 durch ein ok? symbolisiert, da hier im Prinzip ermittelt wird, ob das Bauteil BT, das zuvor im Schritt S2 geprüft wurde, in Ordnung ist.

Ein solcher Vorgabewert Vw kann bei allen Ausführungsformen z.B. ein Sollwert unter Berücksichtigung entsprechender Toleranzen oder eine Bauteile-Spezifikation sein.

Ein solcher Vorgabewert Vw kann bei allen Ausführungsformen z.B. ein Sollwert sein, der aus einem Speicher (z.B. aus dem Speicher 11) bereitgestellt wird.

Mit anderen Worten ausgedrückt, wird im Schritt c) (Schritt S3) geprüft, ob das Zahnrad-Bauteil BT nach der Bearbeitung S1 der vorgegebenen Bauteile-Spezifikation entspricht. Dabei ist jedoch zu berücksichtigen, dass eine Inline-Prüfung iM im Rahmen der Erfindung lediglich in der Lage ist einen oder einige wenige Prüfwerte PW bereit zu stellen und im Schritt S3 einem Vergleich zu unterziehen.

Im Rahmen der Schritte b) und c) wird quasi eine kursorische Prüfung und Bewertung des Bauteils BT vorgenommen.

Wie erwähnt, stellt die Inline-Prüfung iM im Schritt b) mindestens einen Prüfwert Pw bereit. Der Begriff des Prüfwertes PW ist hier breit zu verstehen, da es bei der Inline-Prüfung z.B. um das Überprüfen mindestens eines Merkmals (eines Parameters, einer Größe oder eines Wertes) des Bauteils BT geht. Der Prüfwert Pw muss also nicht zwingend ein präziser Wert sein, sondern es geht hier vorzugsweise bei allen Ausführungsformen eher um eine qualitative oder aber um eine erste quantitative Aussage in Bezug auf das Bauteil BT.

Im Nachfolgenden wird dann jeweils eine Fallunterscheidung vorgenommen, wie in Fig. 2 und 3 dadurch angedeutet, dass ausgehend von dem Modul iM, das die Inline-Prüfung symbolisiert, ein durchgezogener Pfeil 17 abwärts in Richtung der Offline-Messvorrichtung 20 zeigt. Falls ein Zahnrad-Bauteil BT im Rahmen der Inline-Prüfung iM für gut befunden wird (Schritt d), so wird es als Gutteil GT ausgegeben (Schritt S4). In Fig. 2 und 3 ist daher an dem abwärts gerichteten Pfeil 17 eine Abzweigung mit dem Bezugszeichen GT gezeigt.

Diese Abzweigung symbolisiert, dass diejenigen Bauteile BT, die im Rahmen der kursorischen Prüfung und Bewertung für gut befunden wurden, die Fertigungsstraße 100 verlassen. In Fig. 4 entspricht das Abgeben oder Entnehmen des Gutteils GT dem Schritt S4.

Falls ein Zahnrad-Bauteil BT im Rahmen der Inline-Prüfung iM nicht für gut befunden wird (Schritt e) bzw. S5), so wird dieses Zahnrad-Bauteil BT (bis auf weiteres) als vorläufiges Ausschussteil AT* eingestuft. In diesem Fall wird das vorläufige Ausschussteil AT* im Schritt f) (Schritt S5) an eine Offline-Messvorrichtung 20 übergeben. In Fig. 2 und 3 zeigt der Pfeil AT* daher in Richtung der Offline-Messvorrichtung 20.

Für ein wirtschaftliches Arbeiten einer solchen Gesamtvorrichtung 100, wie beispielhaft in Fig. 2 und 3 gezeigt, ist die Balance zwischen der Anzahl an Gutteilen GT und vorläufigen Ausschussteilen AT* wichtig. Wenn jedes Bauteil BT als vorläufiges Ausschussteil AT* ausgesondert und separat nachgemessen werden müsste, dann würde die Offline-Messvorrichtung 20 quasi wie eine Inline-Prüfeinrichtung eingesetzt. In diesem Fall würde die Taktzeit der relativ langsamen Offline-Messvorrichtung 20 den Durchsatz der Fertigungslinie 100 deutlich reduzieren.

Es ist daher für eine funktionierende Gesamtvorrichtung 100 der Erfindung wichtig, eine ausgewogene Balance zwischen den beiden Prüf- bzw. Messverfahren iM und oM zu finden. Um im Rahmen dieses Ansatzes trotzdem eine zuverlässig und robust arbeitende Lösung zu ermöglichen, setzt die Erfindung im Schritt i) auf eine automatisierte Anpassung der Inline-Prüfung iM, falls die offline-Messung oM eine solche Anpassung erforderlich macht.

Vorzugsweise wird bei allen Ausführungsformen im Schritt i) nur dann eine konkrete Anpassung der Inline-Prüfung iM vorgenommen, wenn der Prüfwert Pw der Inline-Prüfung iM signifikant von dem Messwert Mw der Offline-Messung oM abweicht. Zu diesem Zweck kann auch hier ein Toleranzfenster vorgegeben werden. Ein solches Toleranzfenster kann auf den Prüfwert (z.B. Pw ± 5%) oder auf den Messwert Mw (z.B. Mw ± 5%) bezogen sein. Das erfindungsgemäße Verfahren setzt somit auf eine schnelle Inline-Prüfung iM mit externem Abgleich über eine Offline-Messung oM, um so die Qualität der Inline-Prüfung iM permanent überprüfen und gegebenenfalls korrigieren zu können.

Um eine automatisierte Anpassung zu ermöglichen, wird im Schritt i) ermittelt, ob es eine Abweichung des Messwertes von dem Prüfwert gibt. Im Fig. 4 ist der Vergleich im Schritt S7 durch ein ok? symbolisiert, da hier im Prinzip nochmals genauer ermittelt wird, ob die Inline-Prüfung iM des Bauteils BT mit der Offline-Messung oM übereinstimmt.

In dem Schritt S7 wird vorzugsweise bei allen Ausführungsformen ermittelt, ob der Messwert Mw dem Prüfwert Pw entspricht. In diesem Fall wäre die Abweichung gleich Null. In der Praxis treten jedoch stets kleinere Abweichungen zwischen den Messwerten und den Prüfwerten auf. Da auch in diesen Fällen die Bauteile BT den Spezifikationen entsprechen können, wird für den Schritt S7 vorzugsweise bei allen Ausführungsformen eine (Toleranz-)Grenze vorgegeben, um Bauteile BT, die innerhalb der Spezifikation liegen, von Bauteilen BT unterscheiden zu können, die Ausschuss darstellen, da sie außerhalb der Spezifikation liegen.

Wie eingangs beschrieben, wird im Rahmen des Schrittes S7 ein direkter Vergleich oder ein indirekter Vergleich durchgeführt, wie im Folgenden anhand eines einfachen Beispiels erläutert wird. Falls die Inline-Prüfung iM als Prüfwert Pw zum Beispiel eine Zahndicke von 3mm ± 0,2mm liefert und falls die Offline-Messung oM als Messwert Mw eine Zahndicke von 3,1mm liefert, dann hätte die Offline-Messung oM das Ergebnis der Inline-Prüfung iM bestätigt (da Mw=3,1mm im Prüfwertbereich zwischen 2,8mm bis 3,3mm liegt). Falls die Inline-Prüfung iM als Prüfwert Pw z.B. die Amplitude der Prüfspannung eines Sensors ergibt, so muss dieser Prüfwert Pw bearbeitet werden, um dann im Schritt S7 einen Vergleich zu ermöglichen. Diese Form des Vergleichs wird hier als indirekter Vergleich bezeichnet.

Falls eine Abweichung zwischen Messwert Mw und Prüfwert Pw vorliegt, dann hat die genaue (Nach-)Prüfung in der Offline-Messvorrichtung 20 ein (deutlich) anderes Ergebnis geliefert als die (Vor-) Prüfung in der Inline-Prüfeinrichtung 30 bzw. 140. In diesem Fall kann z.B. ein vorläufiges Ausschussteil AT* nun doch für gut befunden werden. Das Verfahren der Fig. 4 verzweigt hier ausgehend vom Schritt S7 zu den Schritten S8 und S10.

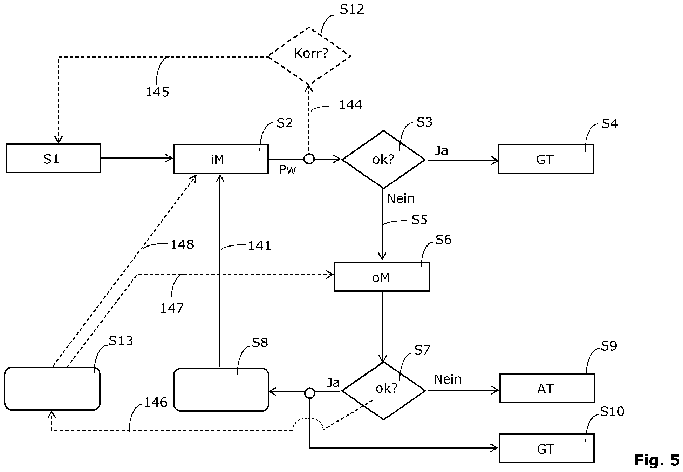

Im Falle einer solchen Abweichung, wird gemäß Erfindung dann im Schritt j) eine automatisierte Anpassung der Inline-Prüfung iM vorgenommen. Diese Anpassung ist in Fig. 2 und 3 durch den strichlierten Pfeil 18 symbolisiert, der die Offline-Messung oM mit der inline-Prüfung iM "verbindet". In Fig. 4 und Fig. 5 ist diese Anpassung durch den Schritt S8 und die rückführende Schleife 141 symbolisiert.

Der Begriff der "automatisierten Anpassung" kann im Rahmen der Erfindung verschiedene Ausführungsformen umfassen, wie im Folgenden beispielhaft erläutert wird.

Unter einer automatisierten Anpassung versteht man im Rahmen der Erfindung z.B. das (Nach-)Justieren oder Eichen der Inline-Prüfeinrichtung 30 bzw. 140. Wenn z.B. ein Sensor der Inline-Prüfeinrichtung 30 bzw. 140 ein Spannungssignal abgibt, dessen Amplitude sich proportional zu einem Messwert am Zahnrad-Bauteil BT ändert, dann kann man z.B. einem Signal von 2 Volt einen genauen Winkelwert zuweisen. Dieser genaue Winkelwert basiert dann auf mindestens einer (Nach-)Messung in der Offline-Messvorrichtung 20.

Die automatisierten Anpassung kann also z.B. zum (Nach-)Justieren der Empfindlichkeit oder zum Eichen der Inline-Prüfeinrichtung 30 bzw. 140 dienen, oder die Anpassung kann bei einem Tabellen-Lookup in einer Auswertetabelle als Korrekturfaktor zur Anwendung kommen.

Vorzugsweise wird bei allen Ausführungsformen der Erfindung im Rahmen des Schrittes S8 die Abweichung der Inline-Prüfung iM und der Offline-Messung oM ausgewertet, bevor dann die automatisierte Anpassung erfolgt.

Wenn die Auswertung über eine Reihe von Messungen an mehreren Bauteilen BT z.B. eine lineare Abweichung zeigt, dann kann im Rahmen der automatisierte Anpassung z.B. ein linearer Korrekturwert an die Inline-Prüfeinrichtung 30 bzw. 140 übergeben werden. Dieser Korrekturwert wird dann beim Durchführen zukünftiger Inline-Prüfungen iM oder beim rechnerischen Bearbeiten der Prüfwerte Pw als linearer Korrekturwert aufaddiert oder subtrahiert.

Es kann bei allen Ausführungsformen der Erfindung im Rahmen des Schrittes S8 eine rechnerische Analyse der Abweichungen erfolgen. So können z.B. die Differenzen zwischen den Ergebnissen der Prüfmittel 30, bzw. 140 und der Messmittel 20 ausgewertet werden, um basierend auf dieser Analyse eine automatisierte Anpassung vorzunehmen.

Das automatisierte Vornehmen einer Anpassung der Inline-Prüfung iM (Schritt S8) kann bei allen Ausführungsformen entweder direkt auf die Inline-Prüfeinrichtung 30 bzw. 140 Einfluss nehmen (z.B. indem diese nachjustiert wird, oder indem z.B. die Empfindlichkeit eines Sensors der Messeinrichtung 30 bzw. 140 verändert wird), oder die Anpassung wird indirekt dadurch vorgenommen, dass die Auswertung (zum Beispiel beim rechnerischen Bearbeiten der Prüfwerte Pw) der Inline-Prüfungen iM rein rechnerisch angepasst wird (z.B. durch einen Korrekturwert oder -faktor).

Vorzugsweise folgt bei allen Ausführungsformen der Erfindung ein nachfolgender Schritt, der es ermöglicht das soeben im Schritt S6 genau gemessene Bauteil BT nachträglich entweder als Gutteil GT (Schritt S10) einzustufen, oder die Einstufung als vorläufiges Ausschussteil AT* zu bestätigen (Schritt S9). Dieser nachfolgende Schritt ist in Fig. 2 und 3 durch eine Weiche 19 links an der Offline-Messvorrichtung 20 symbolisiert. Falls die Einstufung als vorläufiges Ausschussteil AT* bestätigt wurde, wird dieses Bauteil BT dann endgültig als Ausschussteil behandelt und es wird in den Figuren das Bezugszeichen AT verwendet.

Optional kann das Verfahren der Erfindung eine weitere Schleife mit den Elementen 142, S11 und 143 umfassen. Da es sich um eine optionale Ausführungsform handelt, sind die entsprechenden Elemente 142, S11 und 143 in Fig. 4 strichliert gezeigt. Falls das Verfahren vom Schritt S7 zum Schritt S9 verzweigt, kann eine Prüfroutine im Schritt S11 durchgeführt werden. Diese Prüfroutine kann bei allen Ausführungsformen dazu ausgelegt sein die endgültigen Ausschussteile AT (rechnerisch) zu analysieren.

Die Schleife mit den Elementen 142, S11 und 143 kann bei allen Ausführungsformen auch an einer anderen Stelle des Flussdiagramms der Fig. 4 oder 5 ansetzen. Eine Korrektur in Schritt S11 kann z.B. sowohl im Falle eines "für-Gut-Befindens" als auch im Falle eines Aussortierens des Bauteils BT sinnvoll sein.

Vorzugsweise kommt im Rahmen des Schrittes S11 ein Schwellenwert zum Einsatz. Wenn der Schwellenwert überschritten wird, dann kann das Verfahren der Erfindung in den eigentlichen Bearbeitungsschritt S1 eingreifen, um die spanende Bearbeitung anzupassen. Damit kann sicher gestellt werden, dass das Verfahren nicht unnötig viele Ausschussteile AT produziert.

Zusätzlich oder alternativ kann eine solche Prüfroutine auch im Bereich des Schrittes S3 (z.B. am Schritt S5 oder vor dem Schritt S3, wie in Fig. 5 gezeigt) ansetzen. Es sind also Ausführungsformen möglich, bei denen eine Prüfroutine (Schritt S11) im Bereich des Schrittes S7 ansetzt, bei denen eine Prüfroutine (nicht gezeigt) im Bereich des Schrittes S3 ansetzt, oder bei denen je eine Prüfroutine im Bereich des Schrittes S3 und des Schrittes S7 ansetzt.

Das endgültige Trennen von Gutteilen GT und Ausschussteilen AT, ist in Fig. 4 und Fig. 5 durch die Schritte S10 und S9 dargestellt.

In Fig. 5 sind anhand eines weiteren Flussdiagramms die Schritte einer weiteren Ausführungsform des Verfahrens der Erfindung gezeigt. Im Folgenden wird unter anderem auf diese Fig. 5 Bezug genommen. Soweit nicht anders erwähnt, wird in Bezug auf die Schritte S1, S2, S3, S4, S5, S6, S7 und S8 auf die Erläuterungen der Fig. 4 verwiesen. Im Folgenden wird daher primär auf die Unterschiede eingegangen.

Anders als in Fig. 4, setzt in Fig. 5 eine optionale Korrekturschleife mit den Elementen 144, S12 und 145 im Bereich des Schrittes S3 an. Diese Korrekturschleife kann ähnlich aufgebaut sein wie die optionale Korrekturschleife mit den Elementen 142, S11 und 143 der Fig. 4.

Zusätzlich zu den Merkmalen der Fig. 4, umfasst das Verfahren der Fig. 5 Mittel zur Analyse von Abweichungen. Diese Mittel können bei allen Ausführungsformen z.B. die Elemente 146, S13 sowie mindestens eines der Elemente 147, 148 umfassen. Im Schritt S13 wird unter Einsatz eines Softwaremoduls eine rechnerische Analyse der Abweichungen vorgenommen.

Falls diese Analyse Anpassungen erforderlich macht, so kann eine Anpassung der Prüfkriterien der Inline-Prüfung iM und/oder der Offline-Messung oM vorgenommen werden, wie in Fig. 5 durch die Pfade 147, 148 angedeutet. Zu einem Anpassen der Prüfkriterien kann z.B. das Ändern von Toleranzgrenzen gehören. Es kann aber auch zu einer Änderung des Prüfverfahrens kommen, wie am folgenden vereinfachten Beispiel erläutert wird.

Wenn z.B. die Inline-Prüfung iM ursprünglich dazu ausgelegt ist im Schritt S2 eine berührungslose Teilungsmessung an nur drei Zahnflanken des Bauteils BT durchzuführen, so kann die Änderung des Prüfverfahrens so in den Schritt S2 eingreifen, dass nun mehr als drei Zahnflanken in die Teilungsmessung einbezogen werden.

Optional werden bei allen Ausführungsformen der Erfindung zusätzliche Prozessgrössen in die Schritte S8 und/oder S13 mit einbezogen. Auch dies wird im Folgenden anhand eines einfachen Beispiels erläutert.

Als Prozessgrösse kann z.B. im Schritt S1 oder im Schritt S2 die Temperatur des Bauteils BT gemessen und gespeichert werden. Das Messen und Speichern der Temperatur gibt für die Inline-Prüfung iM und/oder die Offline-Messung oM einen zusätzlichen Parameter, der berücksichtigt werden kann.

Auf diesem Wege kann ermittelt werden, ob sich ab einer bestimmten Temperatur des Bauteils BT ein Anstieg der Anzahl der Ausschussteile AT* oder AT ergibt.

Falls eine Analyse dieser Prozessgrösse ergibt, dass vermehrt Ausschussteile AT* oder AT produziert werden, während die Offline-Messung oM die Inline-Prüfung iM bestätigt hat, so kann z.B. darauf geschlossen werden, dass die spanende Bearbeitung S1 ab der bestimmten Temperatur wirklichen Ausschuss produziert. In diesem Fall kann z.B. über die Elemente 142, S11, 143 und/oder 144, S12, S145 korrigierend auf die spanende Bearbeitung im Schritt S1 Einfluss genommen werden.

Falls eine Analyse dieser Prozessgrösse ergibt, dass vermehrt Ausschussteile AT* oder AT erkannt werden und, dass die Offline-Messung oM die Inline-Prüfung iM widerlegt hat, dann kann z.B. darauf geschlossen werden, dass die Inline-Prüfung iM aufgrund einer zu hohen Temperatur des Bauteils BT falsche Ergebnisse liefert. In diesem Fall kann z.B. über den Pfad 148 eine Anpassung des Messstrategie der Inline-Prüfung iM vorgenommen werden.

Als Prozessgrösse werden hier Zustandsgrössen oder -werte des Bauteils BT (z.B. die Temperatur des Bauteils) und/oder der Maschine 150 (z.B. die Temperatur der Werkstückspindel der Maschine 150) und/oder der Messeinrichtung 30 bzw. 140 (z.B. die Temperatur der Werkstückmessspindel der Messeinrichtung 30 bzw. 140) bezeichnet.

**Bezugszeichen:**

| | |
|---|---|
| verzahnunqsbearbeitende Maschine | 10 |
| Speicher | 11 |
| Doppelpfeil | 12 |
| Rechner | 13 |
| Display | 14 |
| Handling von Zahnrad-Bauteilen / Handhabungsverbindung | 15 |
| Weiche | 16 |
| Ausgabe der Inline-Prüfung iM | 17 |
| automatisierte Anpassung | 18 |
| Weiche | 19 |
| Messeinrichtung | 20 |
| | |
| (integrierte) Messeinrichtung | 30 |
| | |
| Gesamtvorrichtung / Fertigungslinie / Fertigungsstraße | 100 |
| Messeinrichtunq | 140 |
| Schleife / Pfad | 141 |
| Schleife / Pfad | 142 |
| Schleife / Pfad | 143 |
| Schleife / Pfad | 144 |
| Schleife / Pfad | 145 |
| Schleife / Pfad | 146 |
| Schleife / Pfad | 147 |
| Schleife / Pfad | 148 |
| | |
| verzahnunqsbearbeitende Maschine | 150 |
| | |
| Ausschuss- Teil | AT |
| vorläufiges Ausschuss-Teil | AT* |
| (Zahnrad-)Bauteil | BT |
| Gutteil | GT |
| inline Prüfung | iM |
| ganze Zahl grösser gleich 1 | k |
| Messwert | Mw |
| natürliche Zahl | n |
| offline Messung | oM |
| Prüfwert | Pw |
| Schritte | S1 - S13 |
| Software(-modul) | SW |
| Vorgabewert | Vw |
| Zähnezahl | z |

## Patentansprüche

1. Verfahren zur automatisierten Bearbeitung von Zahnrad-Bauteilen (10) in einer Gesamtvorrichtung (100), umfassend die folgenden Schritte:
a) spanabhebendes Bearbeiten eines Zahnrad-Bauteils (BT) in einer Verzahnungsmaschine (150),
b) Durchführen einer Inline-Prüfung (iM) des Zahnrad-Bauteils (BT) nach dem spanabhebenden Bearbeiten, wobei die Inline-Prüfung (iM) in einer Inline-Prüfeinrichtung vorgenommen wird, die in oder an der Verzahnungsmaschine (150) angeordnet ist, oder wobei die Inline-Prüfung (iM) in einer separaten Inline-Prüfeinrichtung vorgenommen wird und mindestens einen Prüfwert (Pw) bereit stellt,
c) Durchführen eines Vergleichs des mindestens einen Prüfwertes (Pw) mit mindestens einem Vorgabewert (Vw),
d) falls der Schritt c) positiv verläuft, dann Ausgeben des Zahnrad-Bauteils (BT) als Gutteil (GT), **dadurch gekennzeichnet, dass**
e) falls der Schritt c) negativ verläuft, dann
f) Überführen des Zahnrad-Bauteils (BT) in eine externe Messeinrichtung (20) zum Durchführen einerOffline-Messung (oM),
g) Durchführen der Offline-Messung (oM) des Zahnrad-Bauteils (BT), wobei die Offline-Messung (oM) mindestens einen Messwert (Mw) bereit stellt,
h) Durchführen eines Vergleichs des Messwertes (Mw) mit dem Prüfwert (Pw),
i) falls der Schritt h) keine Abweichung des Messwertes (Mw) von dem mindestens einen Prüfwert (Pw), oder nur eine Abweichung innerhalb einer vorgegebenen Grenze ergibt, dann automatisiertes Vornehmen einer Anpassung der Inline-Prüfung (iM).

2. Verfahren nach Anspruch 1, **dadurch gekennzeichnet, dass** die Inline-Prüfung (iM) in der Verzahnungsmaschine (150) oder unmittelbar im Bereich der Verzahnungsmaschine (150) durchgeführt wird.

3. Verfahren nach Anspruch 1, **dadurch gekennzeichnet, dass** die Inline-Prüfung (iM) in einer Messeinrichtung (140) durchgeführt wird, die durch eine Handhabungsverbindung (15) mit der Verzahnungsmaschine (150) verbunden ist.

4. Verfahren nach einem der Ansprüche 1 bis 3, **dadurch gekennzeichnet, dass** die Gesamtvorrichtung (100) takt-basiert arbeitet.

5. Verfahren nach Anspruch 4, **dadurch gekennzeichnet, dass** die Gesamtvorrichtung (100) einen Grundtakt vorgibt, wobei das Durchführen der Inline-Prüfung (iM) des Schrittes b) eine Zeitdauer beansprucht, die kürzer ist als der Grundtakt oder die dem Grundtakt entspricht.

6. Verfahren nach Anspruch 5, **dadurch gekennzeichnet, dass** das Durchführen der Offline-Messung (oM) des Schrittes g) eine Zeitdauer beansprucht, die länger ist als der Grundtakt.

7. Verfahren nach einem der Ansprüche 1 bis 6, **dadurch gekennzeichnet, dass** im Schritt e) oder nach dem Schritt e) das entsprechende Zahnrad-Bauteil (BT) temporär als Ausschussteil (AT*) definiert wird.

8. Verfahren nach einem der Ansprüche 1 bis 6, **dadurch gekennzeichnet, dass** nach dem Schritt i), falls sich keine Abweichung des mindestens einen Messwertes (Mw) von dem mindestens einen Prüfwert (Pw), oder nur eine Abweichung innerhalb einer vorgegebenen Grenze ergeben hat, das entsprechende Zahnrad-Bauteil (BT) als Gutteil ausgegeben wird.

9. Verfahren nach einem der Ansprüche 1 bis 6, **dadurch gekennzeichnet, dass** im Rahmen des Schrittes i)
- ein (Nach-)Justieren einer Inline-Prüfeinrichtung (30, 140), die zum Durchführen der Inline-Prüfung (iM) eingesetzt wurde vorgenommen wird, oder
- eine Eichung der Inline-Prüfeinrichtung (30, 140) vorgenommen wird, oder
- eine Kalibrierung der Inline-Prüfeinrichtung (30, 140) vorgenommen wird, oder
- eine Anpassung bei einer rechnerischen Aufbereitung oder Verarbeitung des Prüfwertes vorgenommen wird, oder
- eine Anpassung eines Schwellenwerts der Inline-Prüfeinrichtung(30, 140) vorgenommen wird, oder
- eine Anpassung bei einer Auswertung oder Verarbeitung des ersten Prüfwerts vorgenommen wird, oder
- eine Anpassung von Prüfkriterien der Inline-Prüfeinrichtung (30, 140) vorgenommen wird.

10. Gesamtvorrichtung (100) zur automatisierten Bearbeitung von Zahnrad-Bauteilen (10) mit:
- einer verzahnungsbearbeitenden Maschine (150) zum spanabhebenden Bearbeiten einer Serie von Zahnrad-Bauteilen (BT),
- einer ersten Messeinrichtung (30, 140), die zum Durchführen einer Inline-Prüfung (iM) jedes Bauteils (BT) ausgelegt ist, das zuvor in der Maschine (150) bearbeitet wurden, wobei es sich bei der ersten Messeinrichtung (30, 140) um eine Inline-Prüfeinrichtung handelt, die in oder an der Verzahnungsmaschine (150) angeordnet ist, oder wobei die erste Messeinrichtung als separate Messeinrichtung ausgeführt ist,
- einer zweiten Messeinrichtung (20), die als externe Messeinrichtung (20) zum Durchführen einer Offline-Messung (oM) von einem Teil der Bauteile (BT) ausgelegt ist, die zuvor in der ersten Messeinrichtung (30, 140) geprüft wurden, und
- eine Schleife (18),
- eine Software (SW), die zum Durchführen der folgenden Schritte für jedes Bauteil (BT) ausgelegt ist:
∘ Durchführen eines ersten Vergleichs mindestens eines Prüfwertes (Pw), der von der ersten Messeinrichtung (30, 140) bereitgestellt wurde, mit mindestens einem Vorgabewert (Vw),
∘ Auslösen der Ausgabe des entsprechenden Zahnrad-Bauteils (BT) als Gutteil (GT), falls das Durchführen des ersten Vergleichs positiv verläuft,
∘ Überführen des entsprechenden Zahnrad-Bauteils (BT) in die zweite Messeinrichtung (20) zum Durchführen der Offline-Messung (oM),
∘ Durchführen eines zweiten Vergleichs von mindestens einem Messwert (Mw), der von der zweiten Messeinrichtung (20) bereitgestellt wurden, mit dem mindestens einen Prüfwert (Pw),
∘ automatisiertes Vornehmen einer Anpassung der Inline-Prüfung (iM) und/oder der ersten Messeinrichtung (30, 140) über die Schleife (18), falls der zweite Vergleich keine Abweichung der Messwerte von dem mindestens einen Prüfwert, oder nur eine Abweichung innerhalb einer vorgegebenen Grenze ergibt.

11. Gesamtvorrichtung (100) nach Anspruch 10, **dadurch gekennzeichnet, dass** die Software (SW) Teil einer (Maschinen-)Steuerung ist, oder dass die Software (SW) in einem Rechner (13) installiert ist, der mit der Gesamtvorrichtung (100) in Kommunikationsverbindung steht.

12. Gesamtvorrichtung (100) nach Anspruch 10 oder 11, **dadurch gekennzeichnet, dass** die erste Messeinrichtung (30, 140) in der Verzahnungsmaschine (150) oder unmittelbar im Bereich der Verzahnungsmaschine (150) angeordnet ist.

13. Gesamtvorrichtung (100) nach Anspruch 10 oder 11, **dadurch gekennzeichnet, dass** die erste Messeinrichtung (30, 140) als separate Messeinrichtung (140) ausgelegt ist, die durch eine Handhabungsverbindung (15) mit der Verzahnungsmaschine (150) verbindbar ist.

14. Gesamtvorrichtung (100) nach einem der Ansprüche 10 bis 13, **dadurch gekennzeichnet, dass** die Gesamtvorrichtung (100) dazu ausgelegt ist takt-basiert zu arbeiten.

15. Gesamtvorrichtung (100) nach Anspruch 14, **dadurch gekennzeichnet, dass** durch die Gesamtvorrichtung (100) ein Grundtakt vorgebbar ist, wobei das Durchführen der Inline-Prüfung (iM) eine Zeitdauer beansprucht, die kürzer ist als der Grundtakt, oder die dem Grundtakt entspricht.

16. Gesamtvorrichtung (100) nach Anspruch 15, **dadurch gekennzeichnet, dass** das Durchführen der Offline-Messung (oM) eine Zeitdauer beansprucht, die länger ist als der Grundtakt.

17. Gesamtvorrichtung (100) nach einem der Ansprüche 10 bis 13, **dadurch gekennzeichnet, dass** sie dazu ausgelegt ist einen Teil der Serie von Zahnrad-Bauteilen (BT) temporär als Ausschussteil (AT*) auszugeben.

## Claims

1. A method for the automated machining of gear components (10) in an overall device (100), comprising the following steps:
a) machining a gear component (BT) in a gear-cutting machine (150),
b) performing an inline test (iM) of the gear component (BT) after machining, wherein the inline test (iM) is performed in an inline test device arranged in or on the gear-cutting machine (150), or wherein the inline test (iM) is performed in a separate inline test device and provides at least one test value (Pw),
c) carrying out a comparison of the at least one test value (Pw) with at least one default value (Vw),
d) if step c) is positive, then outputting the gear part (BT) as a good part (GT), **characterized in that**
e) if step c) is negative, then
f) transferring the gear component (BT) to an external measuring device for carrying out an offline measurement (oM),
g) performing the offline measurement (oM) of the gear component (BT), wherein the offline measurement (oM) provides at least one measured value (Mw),
h) performing a comparison of the at least one measured value (Mw) with the at least one test value (Pw),
i) if the step h) does not result in a deviation of the measured value (Mw) from the at least one test value (Pw), or only a deviation within a predetermined limit, then automatically making an adaptation of the inline test.

2. A method according to claim 1, **characterized in that** the inline test (iM) is carried out in the gear-cutting machine (150) or directly in the region of the gear-cutting machine (150).

3. A method according to claim 1, **characterized in that** the inline test (iM) is carried out in a measuring device (140), which is connected by a handling connection (15) to the gear-cutting machine (150).

4. A method according to one of the claims 1 to 3, **characterized in that** the overall device (100) operates in a clock-based manner.

5. A method according to claim 4, **characterized in that** the overall device (100) predetermines a basic clock rate, wherein the performance of the inline test (iM) of step b) requires a duration which is shorter than the basic clock rate or corresponds to the basic clock rate.

6. A method according to claim 5, **characterized in that** the performance of the offline measurement (oM) of step g) requires a duration which is longer than the basic clock rate.

7. A method according to one of the claims 1 to 6, **characterized in that** in step e) or after step e), the corresponding gear component (BT) is temporarily defined as a reject part (AT*).

8. A method according to one of the claims 1 to 6, **characterized in that** after step i), if no deviation of the at least one measured value (Mw) from the at least one test value (Pw) or only a deviation within a predetermined limit has occurred, the corresponding gear component (BT) is output as a good part.

9. A method according to one of the claims 1 to 6, **characterized in that**, in the context of step i)
- a (re-)adjustment of an inline test device (30, 140) used to perform the inline test (iM) is carried out, or
- a gauging of the inline test device (30, 140) is carried out, or
- a calibration of the inline test device (30, 140) is carried out, or
- an adaptation is carried out in the case of a computational preparation or processing of the test value, or
- an adaptation of a threshold value of the inline test device (30, 140) is carried out, or
- an adaptation in the evaluation or processing of the first test value is carried out, or
- an adaptation of test criteria of the inline test device (30, 140) is carried out.

10. An overall device (100) for the automated machining of gear components (10), comprising:
- a gear-cutting machine (150) for machining a series of gear components (BT),
- a first measuring device (30, 140) adapted to perform an inline test (iM) of each component (BT) previously machined in the machine (150), wherein the first measuring device (30, 140) is an inline measuring device being arranged in or on the gear-cutting machine (150) or being a separate measuring device,
- a second measuring device (20) adapted to perform an offline measurement (oM) of a part of the components (BT) previously tested in the first measuring device (30, 140), and
- a loop (18),
- a software (SW), adapted to perform the following steps for each component (BT):
∘ performing a first comparison of at least one test value (Pw), which was provided by the first measuring device (30, 140), with at least one default value (Vw),
∘ triggering the output of the corresponding gear component (BT) as a good part (GT) if the performance of the first comparison is positive,
∘ transferring the corresponding gear component (BT) into the second measuring device (20) for performing the offline measurement (oM),
∘ performing a second comparison of at least one measured value (Mw), which was provided by the second measuring device (20), with the at least one test value (Pw),
∘ automated performance of an adaptation of the inline test (iM) and/or the first measuring device (30, 140) via the loop (18), if the second comparison does not produce a deviation of the measured values from the at least one test value, or only a deviation within a predefined limit.

11. An overall device (100) according to claim 10, **characterized in that** the software (SW) is part of a (machine) controller, or the software (SW) is installed in a computer (13) which is connected via a communication link to the overall device (100).

12. An overall device (100) according to claim 10 or 11, **characterized in that** the first measuring device (30, 140) is arranged in the gear-cutting machine (150) or directly in the region of the gear-cutting machine (150).

13. An overall device (100) according to claim 10 or 11, **characterized in that** the first measuring device (30, 140) is designed as a separate measuring device (140), which is connected via a handling connection (15) to the gear-cutting machine (150).

14. An overall device (100) according to one of the claims 10 to 13, **characterized in that** the overall device (100) is designed to operate in a clock-based manner.

15. An overall device (100) according to claim 14, **characterized in that** a basic clock rate can be predetermined by the overall device (100), wherein performing the inline test (iM) requires a duration which is shorter than the basic clock rate or which corresponds to the basic clock rate.

16. An overall device (100) according to claim 15, **characterized in that** performing the offline measurement (oM) requires a duration which is longer than the basic clock rate.

17. An overall device (100) according to one of the claims 10 to 13, **characterized in that** it is adapted to output a part of the series of gear components (BT) temporarily as a reject part (AT*).

## Revendications

1. Procédé d'usinage automatisé de composants de roue d'engrenage (10) dans un dispositif global (100) comprenant les étapes suivantes :
a) usiner par enlèvement de matière un composant de roue d'engrenage (BT) dans une machine à tailler les engrenages (150),
b) réaliser un contrôle en ligne (iM) du composant de roue d'engrenage (BT) après l'usinage par enlèvement de matière, le contrôle en ligne (iM) étant réalisé dans un dispositif de contrôle en ligne agencé dans ou sur la machine à tailler les engrenages (150), ou le contrôle en ligne (iM) étant effectué dans un dispositif de contrôle en ligne séparé et fournissant au moins une valeur de contrôle (Pw),
c) comparer la au moins une valeur de contrôle (Pw) avec au moins une valeur de référence (Vw),
d) si l'étape c) se déroule de manière positive, alors distribuer le composant de roue d'engrenage (BT) comme un composant correct (GT), **caractérisé en ce que**
e) si l'étape c) se déroule de façon négative, alors
f) transférer le composant de roue d'engrenage (BT) dans un dispositif de mesure externe (20) pour réaliser une mesure hors ligne (oM),
g) réaliser la mesure hors ligne (oM) du composant de roue d'engrenage (BT), la mesure hors ligne (oM) fournissant au moins une valeur de mesure (Mw),
h) comparer la valeur de mesure (Mw) avec la valeur de contrôle (Pw),
i) si l'étape h) n'indique aucun écart entre la valeur de mesure (Mw) et la au moins une valeur de contrôle (Pw), ou bien uniquement un écart dans une limite prédéfinie, procéder alors de façon automatisée à un ajustement du contrôle en ligne (iM).

2. Procédé selon la revendication 1, **caractérisé en ce que** le contrôle en ligne (iM) est effectué dans la machine à tailler les engrenages (150) ou directement dans la zone de la machine à tailler les engrenages (150).

3. Procédé selon la revendication 1, **caractérisé en ce que** le contrôle en ligne (iM) est effectué dans un dispositif de mesure (140) qui est raccordé à la machine à tailler les engrenages (150) par une liaison de manipulation (15).

4. Procédé selon l'une des revendications 1 à 3, **caractérisé en ce que** le dispositif global (100) fonctionne sur la base de cycles.

5. Procédé selon la revendication 4, **caractérisé en ce que** le dispositif global (100) donne un cycle de base, la réalisation du contrôle en ligne (iM) de l'étape b) nécessitant une durée inférieure au cycle de base ou correspondant au cycle de base.

6. Procédé selon la revendication 5, **caractérisé en ce que** la réalisation de la mesure hors ligne (oM) de l'étape g) nécessite une durée plus longue que le cycle de base.

7. Procédé selon l'une des revendications 1 à 6, **caractérisé en ce qu'**à l'étape e) ou après l'étape e) le composant de roue d'engrenage correspondant (BT) est défini temporairement comme pièce refusée (AT*).

8. Procédé selon l'une des revendications 1 à 6, **caractérisé en ce qu'**après l'étape i), s'il n'a pas été constaté d'écart entre la au moins une valeur de mesure (Mw) et la au moins une valeur de contrôle (Pw), ou bien uniquement un écart dans la limite prédéfinie, le composant de roue d'engrenage correspondant (BT) est fourni comme pièce correcte.

9. Procédé selon l'une des revendications 1 à 6, **caractérisé en ce que**, dans le cadre de l'étape i)
- on procède à un ajustement (réajustement) du dispositif de contrôle en ligne (30, 140) qui a été utilisé pour effectuer le contrôle en ligne (iM), ou
- on procède à un étalonnage du dispositif de contrôle en ligne (30, 140), ou
- on procède à un calibrage du dispositif de contrôle en ligne (30, 140), ou
- on procède à une adaptation dans le cadre d'un traitement arithmétique de la valeur de contrôle, ou
- on procède à une adaptation d'une valeur seuil du dispositif de contrôle en ligne (30, 140), ou
- on procède à une adaptation dans le cadre d'une évaluation ou d'un traitement de la première valeur de contrôle, ou
- on procède à une adaptation des critères de contrôle du dispositif de contrôle en ligne (30, 140).

10. Dispositif global (100) pour un traitement automatisé de composants de roue d'engrenage (10) comprenant :
- une machine à tailler les engrenages (150) destinée à usiner par enlèvement de matière une série de composants de roue d'engrenage (BT),
- un premier dispositif de mesure (30, 140) conçu pour réaliser un contrôle en ligne (iM) de chaque composant (BT) qui a été préalablement usiné dans la machine (150), le premier dispositif de mesure (30, 140) étant un dispositif de contrôle en ligne agencé dans ou sur la machine à tailler les engrenages (150), ou bien le premier dispositif de mesure étant réalisé sous la forme d'un dispositif de mesure séparé,
- un deuxième dispositif de mesure (20) conçu comme un dispositif de mesure externe (20) pour réaliser une mesure hors ligne (oM) d'une partie des composants (BT) qui ont été préalablement contrôlés dans le premier dispositif de mesure (30, 140), et
- un circuit (18),
- un logiciel (SW) conçu pour réaliser les étapes suivantes pour chaque composant (BT) :
• réaliser une première comparaison entre au moins une valeur de contrôle (Pw) qui a été fournie par le premier dispositif de mesure (30, 140) et au moins une valeur de référence (Vw),
• déclencher la sortie du composant de roue d'engrenage correspondant (BT) comme pièce correcte (GT), dans le cas où la première comparaison se déroule de façon positive,
• transférer le composant de roue d'engrenage correspondant (BT) dans le deuxième dispositif de mesure (20) pour réaliser la mesure hors ligne (oM),
• réaliser une deuxième comparaison entre au moins une valeur de mesure (Mw) qui a été fournie par le deuxième dispositif de mesure (20) et la au moins une valeur de contrôle (Pw),
• procéder de façon automatisée à un ajustement du contrôle en ligne (iM) et/ou du premier dispositif de mesure (30, 140) par le biais du circuit (18), dans le cas où la deuxième comparaison n'indique pas d'écart entre les valeurs de mesure et la au moins une valeur de contrôle, ou bien uniquement un écart dans la limite prédéfinie.

11. Dispositif global (100) selon la revendication 10, **caractérisé en ce que** le logiciel (SW) est une partie de la commande (des machines), ou **en ce que** le logiciel (SW) est installé dans un ordinateur (13) qui en liaison de communication avec le dispositif global (100).

12. Dispositif global (100) selon la revendication 10 ou 11, **caractérisé en ce que** le premier dispositif de mesure (30, 140) est agencé dans la machine à tailler les engrenages (150) ou directement dans la zone de la machine à tailler les engrenages (150).

13. Dispositif global (100) selon la revendication 10 ou 11, **caractérisé en ce que** le premier dispositif de mesure (30, 140) est conçu comme un dispositif de mesure séparé qui peut être raccordé à la machine à tailler les engrenages (150) par une liaison de manipulation (15).

14. Dispositif global (100) selon l'une des revendications 10 à 13, **caractérisé en ce que** le dispositif global (100) est conçu pour fonctionner sur la base de cycles.

15. Dispositif global (100) selon la revendication 14, **caractérisé en ce que** le dispositif global (100) permet de prédéfinir un cycle de base, la réalisation du contrôle en ligne (iM) nécessitant une durée inférieure au cycle de base ou correspondant au cycle de base.

16. Dispositif global (100) selon la revendication 15, **caractérisé en ce que** la réalisation de la mesure hors ligne (oM) nécessite une durée plus longue que le cycle de base.

17. Dispositif global (100) selon l'une des revendications 10 à 13, **caractérisé en ce qu'**il est conçu pour délivrer une partie de la série de composants de roue d'engrenage (BT) temporairement comme pièces refusées (AT*).
